# EUROPÄISCHE PATENTSCHRIFT

(11) **EP 3 374 158 B1**
(45) Veröffentlichungstag und Bekanntmachung des Hinweises auf die Patenterteilung: **04.03.2020**
(21) Anmeldenummer: 16798697.5
(22) Anmeldetag: 17.11.2016
(51) Int. Cl.: B29C 64/153, B29C 64/20, B33Y 10/00, B33Y 30/00, B33Y 40/00, B22F 3/105, B29C 31/06

(54) **PULVERAUSTRAGSEINHEIT, VORRICHTUNG UND VERFAHREN ZUM GENERATIVEN HERSTELLEN EINES DREIDIMENSIONALEN OBJEKTS**
POWDER DISPENSING UNIT, DEVICE AND METHOD FOR GENERATIVELY PRODUCING A THREE-DIMENSIONAL OBJECT
UNITÉ DE DÉCHARGE DE POUDRE, DISPOSITIF ET PROCÉDÉ DE FABRICATION ADDITIVE D'UN OBJET TRIDIMENSIONNEL

(30) Priorität: 15.12.2015 DE 102015225344
(43) Veröffentlichungstag der Anmeldung: 19.09.2018
(73) Patentinhaber: EOS GmbH Electro Optical Systems, 82152 Krailling (DE)
(72) Erfinder: PATERNOSTER, Stefan, 82346 Andechs (DE); GRÜNBERGER, Stefan, 81739 München (DE)
(74) Vertreter: Prüfer & Partner mbB Patentanwälte · Rechtsanwälte
(86) Internationale Anmeldenummer: PCT/EP2016/078058
(87) Internationale Veröffentlichungsnummer: WO 2017/102242

(56) Entgegenhaltungen:
- WO-A1-2014/176045
- WO-A2-2007/139938
- FR-A3- 2 474 153
- US-B1- 6 401 001

## Beschreibung

Die vorliegende Erfindung bezieht sich auf eine Vorrichtung und ein Verfahren zum generativen Herstellen eines dreidimensionalen Objekts durch schichtweises Aufbringen und selektives Verfestigen eines pulverförmigen Aufbaumaterials, insbesondere auf eine in dieser Vorrichtung enthaltene und bei diesem Verfahren verwendete Pulveraustragseinheit.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen mit einem Laserstrahl selektiv verfestigt.

DE 10 2005 022 308 A1 beschreibt eine Lasersintervorrichtung, bei der das pulverförmige Aufbaumaterial mittels einer über ein Baufeld hin und her bewegbaren Beschichtungseinheit in Form einer aus zwei steifen Klingen bestehenden Doppelklinge auf-gebracht wird. Die Beschichtungseinheit wird zunächst aus einem Vorratsbehälter mit einer zum Aufbringen einer Schicht ausreichenden Menge des Aufbaumaterials gefüllt und verfährt dann über das Baufeld, wobei das in ihr aufgenommene Pulver zu einer dünnen Pulverschicht ausgezogen wird.

In der zum Anmeldezeitpunkt noch nicht veröffentlichten Patentanmeldung DE 10 2015 213 011 ist ein Beschichter beschrieben, der außer der das Pulver zu einer dünnen Pulver-schicht ausziehenden Beschichtungseinheit ein getrennt gebildetes und mit der Beschichtungseinheit gemeinsam bewegbares Vorheizmodul enthält. Die zum Aufbringen einer Schicht aus-reichenden Menge des Aufbaumaterials wird dabei nicht von der Beschichtungseinheit selber aufgenommen, sondern von dem Vorheizmodul, und während des Fahrens über das Baufeld kontinuierlich oder portionsweise an die Beschichtungseinheit abgegeben. In dem Vorheizmodul wird das Pulver fluidisiert und mittels einer Strahlungsheizung vorgeheizt.

Durch das Fluidisieren kann es dazu kommen, dass feine Pulverpartikel mit dem zum Fluidisieren verwendeten Medium aus dem Vorheizmodul ausgetragen werden. Weiter kann es beim Beschleunigen oder Bremsen des Moduls dazu kommen, dass fluidisiertes Pulver, das ähnliche Eigenschaften wie eine Flüssigkeit zeigt, über den Rand des Vorheizmoduls überschwappt.

FR 2 474 153 A3 beschreibt ein Verfahren und eine Vorrichtung zum Brennen (Kalzinieren) und Sintern feinpulvriger Materialien. Die Vorrichtung enthält einen Verweilbehälter, in dessen Inneren sich Pulver befindet, und ein Rohr zum Einfüllen von Pulver. Durch einen luftdurchlässigen Boden, der sich über die gesamte Grundfläche des Behälters erstreckt, wird Luft zum Fluidisieren des Pulvers zugeführt.

WO 2007 / 139 938 A2 beschreibt ein Verfahren zum 3D-Druck, bei dem Pulverschichten aufgetragen werden, auf die selektiv ein Binder aufgebracht wird. ein Modul zum schichtweisen Aufbringen des Pulvers einhält einen Pulverbehälter, in dem kein Fluidisieren des Pulvers erfolgt, und einen Einfüllstutzen, über den Pulver mittels eines Luftstroms, der das Pulver mitführt, in den Pulverbehälter verbracht wird.

WO 2014 / 176 045 A1 beschreibt das Fluidisieren von in einer Fluidisierkammer enthaltenen Metallpulvers durch Luftzufuhr von unten in die Fluidisierkammer. In einer ausführungsform kann der Luftdurchfluss für verschiedene Fluidisierkammern unterschiedlich eingestellt werden.

Die Aufgabe der vorliegenden Erfindung besteht darin, eine alternative bzw. verbesserte Vorrichtung bzw. ein alternatives bzw. verbessertes Verfahren zum generativen Herstellen eines dreidimensionalen Objekts durch schichtweises Aufbringen und selektives Verfestigen eines pulverförmigen Aufbaumaterials bereitzustellen, insbesondere eine in dieser Vorrichtung enthaltene und bei diesem Verfahren verwendete Pulveraustragseinheit bereitzustellen, bei der das Austragen feiner Pulverpartikel und/oder das Überschwappen fluidisierten Pulvers verringert ist.

Diese Aufgabe wird gelöst durch eine Pulveraustragseinheit gemäß Anspruch 1, einen Beschichter gemäß Anspruch 8, eine Vorrichtung gemäß Anspruch 10 und ein Verfahren gemäß Anspruch 12. Weiterbildungen der Erfindung sind jeweils in den Unteransprüchen angegeben. Dabei kann das Verfahren auch durch die untenstehenden bzw. in den Unteransprüchen ausgeführten Merkmale der Vorrichtungen weitergebildet sein oder umgekehrt, bzw. die Merkmale der Vorrichtungen können auch jeweils untereinander zur Weiterbildung genutzt werden.

Die erfindungsgemäße Pulveraustragseinheit dient zum Aus- und/oder Nachrüsten einer Vorrichtung zum generativen Herstellen eines dreidimensionalen Objekts durch selektives schichtweises Verfestigen von pulverförmigem Aufbaumaterial. Die Vorrichtung enthält einen über ein Baufeld bewegbaren Beschichter zum Aufbringen einer Schicht des Aufbaumaterials auf das Baufeld und eine Verfestigungsvorrichtung zum selektiven Verfestigen der aufgebrachten Schicht an Stellen, die einem Querschnitt des herzustellenden Objekts entsprechen. Die Vorrichtung ist dazu ausgebildet und/oder gesteuert, die Schritte des Aufbringens und des selektiven Verfestigens zu wiederholen, bis das Objekt fertiggestellt ist. Die Pulveraustragseinheit enthält einen Pulverbehälter zur Aufnahme von pulverförmigem Aufbaumaterial und einen Einfüllschacht zum Einfüllen von pulverförmigem Aufbaumaterial in den Pulverbehälter. Die Pulveraustragseinheit ist dazu eingerichtet, das pulverförmige Aufbaumaterial in dem Pulverbehälter und in dem Einfüllschacht unabhängig voneinander zu fluidisieren. Bei einer solchen Pulveraustragseinheit ist es beispielsweise möglich, während eines Fahrens der Pulveraustragseinheit über das Baufeld das Pulver in dem Pulverbehälter zu fluidisieren, aber das Pulver in dem Einfüllschacht nicht zu fluidisieren, wodurch wirkungsvoll ein Austragen feiner Pulverpartikel und/oder ein Überschwappen fluidisierten Pulvers verringert oder sogar verhindert werden kann.

Vorzugsweise enthält die Pulveraustragseinheit weiter eine Dosiereinrichtung, die dazu eingerichtet ist, das in dem Pulverbehälter enthaltene pulverförmige Aufbaumaterial kontinuierlich oder portionsweise an eine Beschichtungseinheit des Beschichters der Vorrichtung abzugeben. Dadurch kann beispielsweise erreicht werden, dass die Beschichtungseinheit immer nur soviel Pulver erhält, wie es gerade für die Beschichtung erforderlich ist.

Vorzugsweise enthält der Pulverbehälter und/oder der Einfüllschacht einen Boden mit einer porösen Platte und/oder Lochplatte, durch die Gas unabhängig voneinander in den Pulverbehälter und/oder in den Einfüllschacht geleitet werden kann, wobei der Boden vorzugsweise ein Heizelement enthält zum Beheizen der porösen Platte und/oder der Lochplatte und/oder des Gases. Dadurch kann beispielsweise das Fluidisieren und/oder Beheizen des Pulvers in der Pulveraustragseinheit auf einfache Weise durchgeführt werden. Dadurch kann beispielsweise die Fluidisierung in dem Pulverbehälter und in dem Einfüllschacht durchgeführt und das zum Fluidisieren verwendete Gas direkt oder indirekt beheizt werden.

Vorzugsweise sind der Pulverbehälter und der Einfüllschacht Teilkammern eines Behälters, die durch eine Trennwand abschnittsweise voneinander getrennt sind. Dadurch kann beispielsweise die Pulveraustragseinheit in besonders einfacher Weise verwirklicht werden.

Vorzugsweise sind der Pulverbehälter und der Einfüllschacht als zwei separate Einheiten gebildet, die miteinander verbunden sind. Dadurch kann beispielsweise ein flexibles Ausbilden von Pulverbehälter und Einfüllschacht unabhängig voneinander durchgeführt werden.

Vorzugsweise ist eine Verbindungsstelle zwischen dem Einfüllschacht und dem Pulverbehälter in der unteren Hälfte der Pulveraustragseinheit, vorzugsweise am Boden der Pulveraustragseinheit angeordnet. Dadurch kann sich beispielsweise das Pulver auf einfache Weise gleichmäßig zwischen Einfüllschacht und Pulverbehälter verteilen, wenn es sowohl im Bereich des Einfüllschachts als auch im Bereich des Pulverbehälters fluidisiert wird.

Vorzugsweise enthält der Pulverbehälter an seiner Oberseite eine Strahlungsheizung zum Vorwärmen des in ihm aufgenommenen pulverförmigen Aufbaumaterials. Dadurch kann beispielsweise das pulverförmige Aufbaumaterial schneller auf eine erforderliche Arbeitstemperatur gebracht werden. Zusätzlich kann eine Abdeckung des Pulverbehälters, etwa in Form eines (fest installierten oder abnehmbaren) Deckels, vorgesehen sein, der beispielsweise oberhalb der Strahlungsheizung angeordnet ist oder in den die Strahlungsheizung integriert ist.

Der erfindungsgemäße Beschichter dient zum Aus- und/oder Nachrüsten einer Vorrichtung zum generativen Herstellen eines dreidimensionalen Objekts durch selektives schichtweises Verfestigen von pulverförmigem Aufbaumaterial. Die Vorrichtung ist daran angepasst, den Beschichter so aufzunehmen, dass er über ein Baufeld bewegbar ist zum Aufbringen einer Schicht des Aufbaumaterials auf das Baufeld. Die Vorrichtung enthält eine Verfestigungsvorrichtung zum selektiven Verfestigen der aufgebrachten Schicht an Stellen, die einem Querschnitt des herzustellenden Objekts entsprechen. Die Vorrichtung ist dazu ausgebildet und/oder gesteuert, die Schritte des Aufbringens und des selektiven Verfestigens zu wiederholen, bis das Objekt fertiggestellt ist. Der Beschichter enthält eine Pulveraustragseinheit der oben beschriebenen Art. Dadurch können beispielsweise die Wirkungen der erfindungsgemäßen Pulveraustragseinheit mit einem Beschichter erzielt werden, der die Pulveraustragseinheit enthält.

Vorzugsweise enthält der Beschichter weiter eine Beschichtungseinheit, die zum Aufnehmen des von der Pulveraustragseinheit abgegebenen Aufbaumaterials und zum Aufbringen des Aufbaumaterials auf das Baufeld geeignet ist, wobei die Beschichtungseinheit vorzugsweise mit der Pulveraustragseinheit gemeinsam bewegbar realisiert ist. Dadurch kann beispielsweise die Pulveraustragseinheit das in dem Pulverbehälter enthaltene pulverförmige Aufbaumaterial kontinuierlich oder portionsweise an die Beschichtungseinheit abgeben, und vorzugsweise kann beispielsweise ein getrennter Antrieb für die Pulveraustragseinheit eingespart werden.

Die erfindungsgemäße Vorrichtung dient zum generativen Herstellen eines dreidimensionalen Objekts durch selektives schichtweises Verfestigen von Aufbaumaterial. Die Vorrichtung enthält einen über ein Baufeld bewegbaren Beschichter zum Aufbringen einer Schicht des Aufbaumaterials auf das Baufeld und eine Verfestigungsvorrichtung zum selektiven Verfestigen der aufgebrachten Schicht an Stellen, die einem Querschnitt des herzustellenden Objekts entsprechen. Die Vorrichtung ist ausgebildet und/oder gesteuert, die Schritte des Aufbringens und des selektiven Verfestigens zu wiederholen, bis das Objekt fertiggestellt ist. Die Vorrichtung enthält weiter eine erfindungsgemäße Pulveraustragseinheit und/oder der Beschichter ist als erfindungsgemäßer Beschichter gebildet. Dadurch können beispielsweise die Wirkungen der erfindungsgemäßen Pulveraustragseinheit mit einer Vorrichtung zum generativen Herstellen eines dreidimensionalen Objekts erzielt werden, die die Pulveraustragseinheit und/oder einen die Pulveraustragseinheit enthaltenden Beschichter enthält.

Vorzugsweise ist die Pulveraustragseinheit mit einer Beschichtungseinheit des Beschichters gemeinsam bewegbar angebracht. Dadurch kann beispielsweise ein getrennter Antrieb für die Pulveraustragseinheit eingespart werden.

Das erfindungsgemäße Verfahren dient zum generativen Herstellen eines dreidimensionalen Objekts durch schichtweises Aufbringen und selektives Verfestigen eines pulverförmigen Aufbaumaterials. Das Verfahren enthält die Schritte des Aufbringens einer Schicht des pulverförmigen Aufbaumaterials auf ein Baufeld mittels eines über das Baufeld fahrenden Beschichters und des selektiven Verfestigens der aufgebrachten Pulverschicht an Stellen, die einem Querschnitt des herzustellenden Objekts entsprechen. Die Schritte des Aufbringens und des selektiven Verfestigens werden wiederholt, bis das Objekt fertiggestellt ist. Der Schritt des Aufbringens wird mit Hilfe einer Pulveraustragseinheit durchgeführt wird, die einen Pulverbehälter zur Aufnahme von pulverförmigem Aufbaumaterial und einen Einfüllschacht zum Einfüllen von pulverförmigem Aufbaumaterial in den Pulverbehälter enthält, wobei die Pulveraustragseinheit über den Einfüllschacht pulverförmiges Aufbaumaterial aufnimmt und das in ihr enthaltene pulverförmige Aufbaumaterial für den Pulverbehälter und den Einfüllschacht unabhängig voneinander fluidisiert. Dadurch können beispielsweise die Wirkungen der erfindungsgemäßen Pulveraustragseinheit in einem Verfahren zum generativen Herstellen eines dreidimensionalen Objekts erzielt werden, das unter Verwendung der Pulveraustragseinheit durchgeführt wird.

Vorzugsweise gibt die Pulveraustragseinheit das in dem Pulverbehälter enthaltene pulverförmige Aufbaumaterial kontinuierlich oder portionsweise an eine Beschichtungseinrichtung des Beschichters der Vorrichtung ab und/oder wird gemeinsam mit der Beschichtungseinrichtung des Beschichters über das Baufeld verfahren wird. Durch die kontinuierliche bzw. portionsweise Abgabe kann beispielsweise erreicht werden, dass die Beschichtungseinheit immer nur so viel Pulver erhält, wie es gerade für die Beschichtung erforderlich ist; durch das gemeinsame Verfahren kann beispielsweise ein getrennter Antrieb für die Pulveraustragseinheit eingespart werden kann.

Vorzugsweise wird während des Aufnehmens des pulverförmigen Aufbaumaterials über den Einfüllschacht das pulverförmige Aufbaumaterial in dem Pulverbehälter der Pulveraustragseinheit und in dem Einfüllschacht der Pulveraustragseinheit fluidisiert, und während des Verfahrens der Pulveraustragseinheit über das Baufeld wird das pulverförmige Aufbaumaterial in dem Einfüllschacht der Pulveraustragseinheit nicht fluidisiert, aber in dem Pulverbehälter der Pulveraustragseinheit fluidisiert. Dadurch kann beispielsweise wirkungsvoll ein Austragen feiner Pulverpartikel und/oder ein Überschwappen fluidisierten Pulvers aus der Pulveraustragseinheit, insbesondere aus dem Pulverbehälter, verringert oder sogar verhindert werden.

Vorzugsweise wird Gas durch eine in dem Boden der Pulveraustragseinheit enthaltene poröse Platte und/oder Lochplatte unabhängig voneinander in den Pulverbehälter und/oder in den Einfüllschacht geleitet, wobei vorzugsweise die poröse Platte und/oder die Lochplatte und/oder das Gas beheizt wird. Dadurch kann beispielsweise die Fluidisierung in dem Pulverbehälter und in dem Einfüllschacht durchgeführt und das zum Fluidisieren verwendete Gas direkt oder indirekt beheizt werden.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum generativen Herstellen eines dreidimensionalen Objekts gemäß der vorliegenden Erfindung.
- Fig. 2a bis 2d: sind schematische Schnittansichten einer in der in Fig. 1 gezeigten Vorrichtung enthaltenen Pulveraustragseinheit gemäß einer ersten Ausführungsform der vorliegenden Erfindung in verschiedenen Betriebszuständen.
- Fig. 3: ist eine schematische Schnittansicht einer Pulveraustragseinheit gemäß einer zweiten Ausführungsform der vorliegenden Erfindung
- Fig. 4: ist eine schematische Schnittansicht einer Pulveraustragseinheit gemäß einer dritten Ausführungsform der vorliegenden Erfindung.

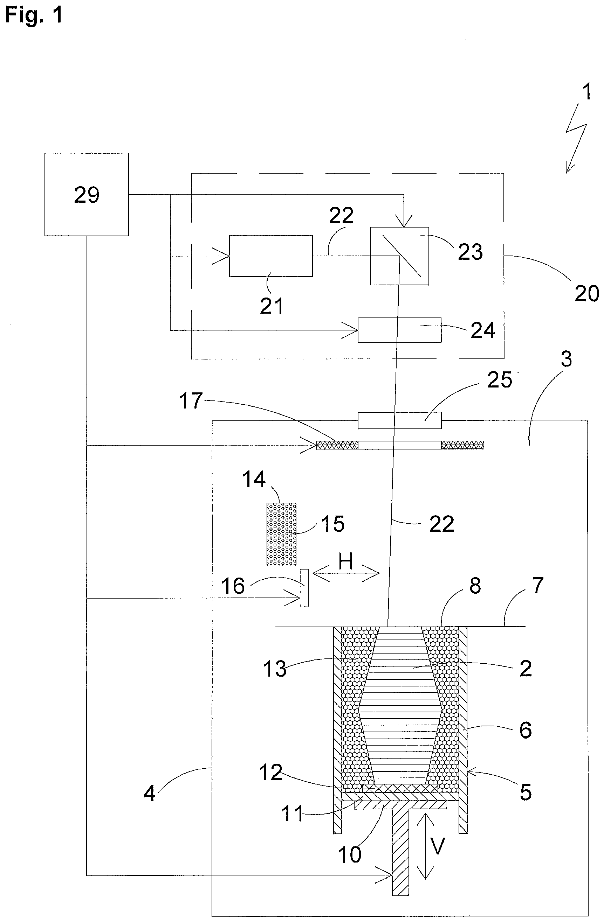

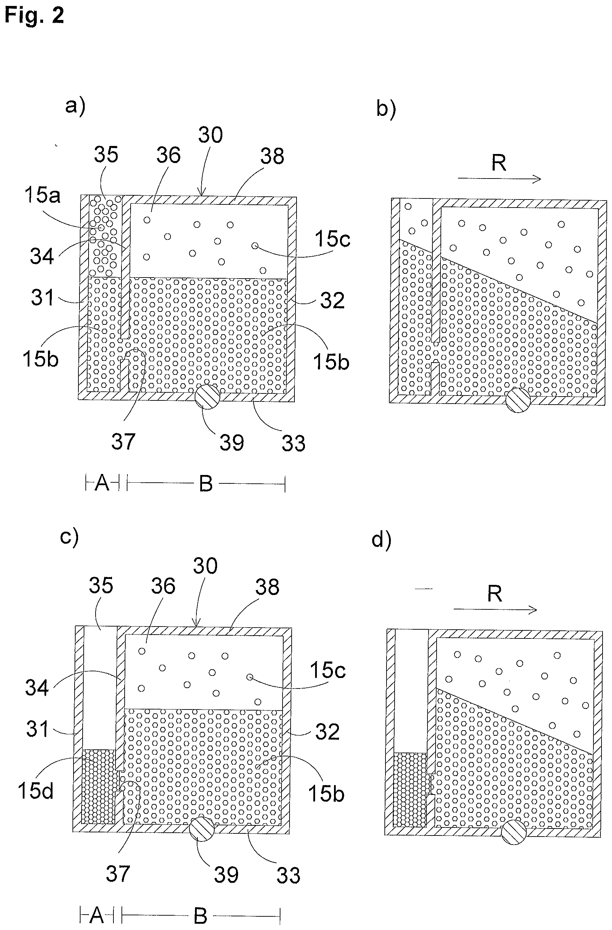

Im Folgenden wird mit Bezug auf Fig. 1 und 2 eine erste Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 angebracht sein, auf der das Objekt 2 aufgebaut wird. Das Objekt 2 kann aber auch auf der Grundplatte 11 selber aufgebaut werden, die dann als Bauplattform dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 auf das Baufeld 8. In der Prozesskammer ist ferner eine Strahlungsheizung 17 angeordnet, die zum Beheizen des auf das Baufeld 8 aufgebrachten Aufbaumaterials 15 dient. Die Strahlungsheizung 17 ist beispielsweise als Infrarotstrahler gebildet.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 10 um eine Höhe abgesenkt, die der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8 und bringt dort eine dünne Schicht des pulverförmigen Aufbaumaterials 15 auf. Das Aufbringen erfolgt zumindest über den gesamten Querschnitt des herzustellenden Objekts 2, vorzugsweise über das gesamte Baufeld 8, also den Bereich der Arbeitsebene 7, der durch eine Vertikalbewegung des Trägers abgesenkt werden kann. Anschließend wird das pulverförmige Aufbaumaterial durch die Strahlungsheizung 17 aufgeheizt. Nach Erreichen einer Arbeitstemperatur wird der Querschnitt des herzustellenden Objekts 2 von dem Laserstrahl 22 abgetastet, so dass das pulverförmige Aufbaumaterial 15 an den Stellen verfestigt wird, die dem Querschnitt des herzustellenden Objekts 2 entsprechen. Diese Schritte werden solange wiederholt, bis das Objekt 2 fertiggestellt ist und der Prozesskammer 3 entnommen werden kann.

Der Beschichter enthält eine (nicht gezeigte) Beschichtungseinheit, die das direkte Aufbringen der Pulverschicht auf das Baufeld bewirkt. Diese Beschichtungseinheit kann beispielsweise ein Wischblatt und/oder eine Klinge und/oder eine Doppelklinge wie im eingangs beschriebenen Stand der Technik und/oder eine Walze und/oder irgendein anderes zum Aufbringen einer Schicht des pulverförmigen Aufbaumaterials geeignetes Beschichtungselement enthalten. Ferner enthält der Beschichter eine Pulveraustragseinheit, die das pulverförmige Aufbaumaterial aus dem Vorratsbehälter aufnimmt und kontinuierlich oder portionsweise an die Beschichtungseinheit abgibt. Vorzugsweise sind die Beschichtungseinheit und die Pulveraustragseinheit gemeinsam miteinander bewegbar realisiert.

Fig. 2 zeigt eine schematische Schnittansicht einer Pulveraustragseinheit 30 gemäß der ersten Ausführungsform.

Wie aus Fig. 2a ersichtlich enthält die Pulveraustragseinheit 30 Seitenwände 31, 32, eine (nicht gezeigte) Vorderwand, eine (nicht gezeigte) Rückwand und einen Boden 33. Durch eine Trennwand 34 ist sie in zwei Kammern unterteilt, von denen eine erste Kammer 35 als Einfüllschacht zum Zuführen von pulverförmigem Aufbaumaterial 15 und eine zweite Kammer 36 als Pulverbehälter zum Aufbewahren des über den Einfüllschacht 35 zugeführten pulverförmigen Aufbaumaterials dient. Beide Kammern stehen über eine Verbindungsöffnung 37, die an einer geeigneten Stelle der Trennwand gebildet ist, miteinander in Verbindung. Vorzugsweise ist diese Verbindungsöffnung 37 in der unteren Hälfte der Pulveraustragseinheit 30 angeordnet. In Fig.2a ist die Verbindungsöffnung 37 im Abstand vom Boden 33 dargestellt, sie kann jedoch auch bis zum Boden 33 reichen. Wichtig ist, dass der Pulverfüllstand im Betrieb der Pulveraustragseinheit 30 höher liegt als die Oberkante der Verbindungsöffnung 37.

Der Pulverbehälter 36 ist durch einen Deckel 38 nach oben abgeschlossen, während der Einfüllschacht 35 nach oben offen ist. Im Boden des Pulverbehälters 36 ist eine Dosiereinrichtung 39 angeordnet, beispielsweise in Form eines Schiebers, eines Messers, einer Welle oder einer anderen geeigneten Form, mittels derer pulverförmiges Aufbaumaterial dosiert an die Beschichtungseinheit abgegeben werden kann.

Der Boden 33 der Pulveraustragseinheit 30 ist so beschaffen, dass das aufgenommene pulverförmige Aufbaumaterial fluidisiert werden kann. Dazu enthält der Boden 33 eine poröse Platte und/oder eine Lochplatte, durch die Gas in den Pulverbehälter und in den Einfüllschacht geleitet werden kann. Gemäß der vorliegenden Erfindung ist der Boden 33 so beschaffen, dass einem Bereich A, der dem Einfüllschacht 35 entspricht, und einem Bereich B, der dem Pulverbehälter 36 entspricht, unabhängig voneinander Gas zugeführt werden kann, so dass das pulverförmige Aufbaumaterial in dem Einfüllschacht 35 und in dem Pulverbehälter 36 unterschiedlich stark fluidisiert werden kann.

Vorzugsweise enthält die Pulveraustragseinheit 30 an ihrem Boden 33 ein (nicht gezeigtes) Heizelement zum Beheizen der porösen Platte bzw. Lochplatte und/oder des Gases. Vorzugsweise enthält die Pulveraustragseinheit 30 ferner an der Oberseite 38 des Pulverbehälters 36 eine (nicht gezeigte) Strahlungsheizung zum Vorwärmen des in ihm aufgenommenen pulverförmigen Aufbaumaterials.

Fig. 2a zeigt einen Zustand beim Füllen der Pulveraustragseinheit 30 mit pulverförmigem Aufbaumaterial. Das Pulver wird von einem (nicht gezeigten) Pulverauslass des Vorratsbehälters oder eines zwischen dem Vorratsbehälter und der Pulveraustragseinheit 30 angeordneten Zwischenmoduls abgegeben und gelangt als Schüttgut 15a in den Einfüllschacht 35 der Pulveraustragseinheit 30.

Während des Einfüllen wird Gas in beide Kammern der Pulveraustragseinheit 30 geleitet und erzeugt ein Wirbelbett des pulverförmigem Aufbaumaterials, das heißt, das Gas versetzt das Pulver in einen wirbelbett- bzw. fließbettähnlichen Zustand, in dem es flüssigkeitsähnliche Eigenschaften aufweist. Dadurch verteilt sich das fluidisierte Pulver 15b durch die Verbindungsöffnung 37 gleichmäßig zwischen dem Einfüllschacht 35 und dem Pulverbehälter 36 der Pulveraustragseinheit 30 mit einer annähernd horizontalen Oberfläche. Durch das Gas können feine Pulverpartikel 15c auch aus dem Wirbelbett des fluidisierten Pulvers 15b in den Raum oberhalb der Oberfläche des fluidisierten Pulverbetts ausgetragen werden.

Die Fluidisierung muss dabei in dem Einfüllschacht 35 und dem Pulverbehälter 36 nicht exakt gleich sein, sie muss nur in beiden Kammern groß genug sein, damit das Pulver in beiden Kammern in einen wirbelbettähnlichen Zustand versetzt wird.

Fig. 2b zeigt einen Zustand, der auftreten würde, wenn die Pulveraustragseinheit 30 in diesem Zustand in einer Richtung R verfahren würde.

Durch die beim Anfahren entstehende Beschleunigung schwappt das fluidisierte Pulver 15b, das sich ähnlich wie eine Flüssigkeit verhält, in der Bewegungsrichtung R nach hinten. Dabei kann es zum Überschwappen von Pulver aus der Pulveraustragseinheit 30 kommen. Außerdem werden durch das Fluidisieren auch in dem Einfüllschacht 35 feine Pulverpartikel 15c aus dem fluidisierten Pulverbett 15b ausgetragen und können durch die Öffnung des Einfüllschachts 35 nach außen entweichen.

Um das zu verhindern, wird bei der Bewegung der Pulveraustragseinheit 30 die Fluidisierung in dem Bereich A des Bodens 33 ausgeschaltet bzw. die Gaszufuhr in diesem Bereich so weit verringert, dass sich dort kein Wirbelbett mit flüssigkeitsähnlichen Eigenschaften ausbilden kann. Dieser Zustand ist in Fig. 2c gezeigt.

Durch das Abschalten der Fluidisierung liegt das Pulver in dem Einfüllschacht 35 nicht in Form eines Wirbelbetts vor, sondern in Form eines Festbetts 15d. In diesem Bereich hat das Pulverbett also keine flüssigkeitsähnlichen Eigenschaften mehr, sondern bildet einen festen Pulverpropfen.

Wie in Fig. 2d gezeigt wirkt dieser Pulverpropfen 15d wie ein seitlicher Verschluss für den Pulverbehälter 36. Das Wirbelbett 15b kann beim Verfahren der Pulveraustragseinheit 30 nur noch innerhalb des abgeschlossenen Pulverbehälters 36 schwappen, aber nicht mehr in dem Einfüllschacht 35. Ferner treten die feinen Pulverpartikel 15c nur innerhalb des Pulverbehälters 36 aus der Oberfläche des Wirbelbetts 15b aus, aber nicht mehr in dem Einfüllschacht 35.

So kann ein Überschwappen von Pulver und ein Austragen feiner Pulverpartikel aus der Pulveraustragseinheit 30 vermieden werden.

Da das Gas von unten nach oben durch das Pulver strömt, wirkt die Fluidisierung in erster Linie nach oben. Dadurch sind unterschiedlich fluidisierte Bereiche auch dann seitlich gut voneinander getrennt, wenn zwischen ihnen keine Trennwand angeordnet ist, also beispielsweise wenn die Verbindungsöffnung 37 bis zum Boden 33 reicht.

Während des Herstellens des dreidimensionalen Objekts 2 wird also während des Aufnehmens von pulverförmigem Aufbaumaterial 15a über den Einfüllschacht das Pulver 15b in dem Pulverbehälter 36 der Pulveraustragseinheit 30 und in dem Einfüllschacht 35 der Pulveraustragseinheit 30 fluidisiert. Während des Verfahrens der Pulveraustragseinheit 30 über das Baufeld 8 wird jedoch nur das Pulver 15b in dem Pulverbehälter 36 fluidisiert, aber das Pulver 15d in dem Einfüllschacht 35 wird nicht fluidisiert. Fluidisiert bedeutet dabei, dass hinreichend Gas zugeführt wird, um das Pulverbett in einen Zustand eines Wirbelbetts zu versetzen, während nicht fluidisiert bedeutet, dass gar kein oder nur so wenig Gas zugeführt wird, dass das Pulverbett nicht in einen Zustand eines Wirbelbetts versetzt wird.

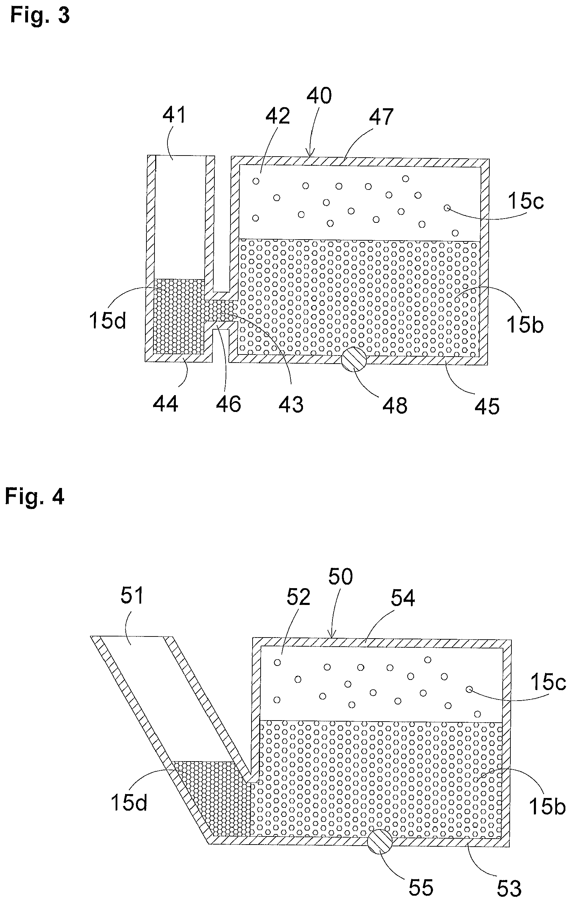

Fig. 3 zeigt eine schematische Schnittansicht einer Pulveraustragseinheit 40 gemäß einer zweiten Ausführungsform.

Während bei der Pulveraustragseinheit 30 der Einfüllschacht 35 und der Pulverbehälter 36 zwei Kammern eines durch eine Trennwand 34 unterteilten Behälters sind, sind sie bei der Pulveraustragseinheit 40 als zwei getrennte Behälter 41, 42 gebildet, die über ein Zwischenstück 43 miteinander verbunden sind. Vorzugsweise ist das Zwischenstück 43 in der unteren Hälfte der Pulveraustragseinheit 40 angeordnet. In Fig. 3 ist das Zwischenstück 43 im Abstand vom Boden dargestellt, es kann jedoch auch auf der Höhe des Bodens angeordnet sein. Wichtig ist, dass der Pulverfüllstand im Betrieb der Pulveraustragseinheit 40 höher liegt als die Oberkante des Zwischenstücks 43.

Da der Einfüllschacht 41 und der Pulverbehälter 42 in dieser Ausführungsform als getrennte Behälter gebildet sind, sind auch der Boden 44 des Einfüllschacht 41, der Boden 45 des Pulverbehälters 42 und der Boden 46 des Zwischenstücks 43 getrennt voneinander gebildet. Auch in dieser Ausführungsform kann dem Boden 44 des Einfüllschachts 41 und dem Boden 45 des Pulverbehälters 42 unabhängig voneinander Gas zugeführt werden, so dass das pulverförmige Aufbaumaterial in dem Einfüllschacht 41 und in dem Pulverbehälter 42 unterschiedlich stark fluidisiert werden kann. Vorzugsweise erfolgt die Gaszufuhr und damit die Fluidisierung in dem Zwischenstück 43 genau so wie in dem Einfüllschacht 41, sie kann aber auch genau so wie in dem Pulverbehälter 42 erfolgen oder getrennt von beiden.

Der übrige Aufbau sowie Betrieb und Wirkungen der vorliegenden Ausführungsform sind dieselben wie bei der ersten Ausführungsform, so dass ihre Beschreibung hier nicht wiederholt wird. Insbesondere enthält auch die Pulveraustragseinheit 40 eine Decke 47 für den Pulverbehälter 42 und an dessen Boden 45 eine Dosiereinrichtung 48 zur Abgabe des pulverförmigen Aufbaumaterials an die Beschichtungseinheit.

Fig. 4 zeigt eine schematische Schnittansicht einer Pulveraustragseinheit 50 gemäß einer dritten Ausführungsform.

In der Pulveraustragseinheit 50 ist der Einfüllschacht 51 schräg angeordnet und an seiner Unterseite mit dem Pulverbehälter 52 verbunden. Der gemeinsame Boden 53 ist so beschaffen, dass dem Einfüllschacht 51 und dem Pulverbehälter 52 unabhängig voneinander Gas zugeführt werden kann, so dass das pulverförmige Aufbaumaterial in dem Einfüllschacht 51 und in dem Pulverbehälter 52 unterschiedlich stark fluidisiert werden kann.

In diesem Fall fällt das pulverförmige Aufbaumaterial nicht senkrecht in den Einfüllschacht 51, sondern rutscht auf seiner Wand herunter und kann durch seinen Impuls aus der schiefen Ebene die Wirbelschicht 15b in dem Pulverbehälter 52 unterspülen.

Der übrige Aufbau sowie Betrieb und Wirkungen der vorliegenden Ausführungsform sind dieselben wie bei der ersten Ausführungsform, so dass ihre Beschreibung hier nicht wiederholt wird. Insbesondere enthält auch die Pulveraustragseinheit 50 eine Decke 54 für den Pulverbehälter 52 und an dessen Boden 53 eine Dosiereinrichtung 55 zur Abgabe des pulverförmigen Aufbaumaterials an die Beschichtungseinheit.

Die Merkmale der oben beschriebenen Ausführungsformen können, soweit möglich, miteinander kombiniert werden. So kann beispielsweise der schräge Einfüllschacht der dritten Ausführungsform, anstatt direkt mit dem Pulverbehälter verbunden zu sein, auch wie bei der zweiten Ausführungsform über ein Zwischenstück mit ihm verbunden sein, oder es kann wie bei der ersten Ausführungsform eine Trennwand mit einer Verbindungsöffnung vorgesehen sein. Das Heizelement am Boden des Pulverbehälters und/oder die Strahlungsheizung an seiner Oberseite können auch bei der zweiten oder dritten Ausführungsform bereitgestellt sein.

Die Pulveraustragseinheit bzw. der Beschichter kann wie oben beschrieben Bestandteil einer Vorrichtung zum generativen Herstellen eines dreidimensionalen Objekts sein, sie können aber auch als getrenntes Modul zum Aus- und/oder Nachrüsten einer solchen Vorrichtung bereitgestellt sein.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines pulverförmigen Aufbaumaterials angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den dem Objektquerschnitt entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das generative Herstellen eines Objekts mittels schichtweisen Auftragens und selektiven Verfestigens eines pulverförmigen Aufbaumaterials unabhängig von der Art und Weise, in der das Aufbaumaterial verfestigt wird.

Als Aufbaumaterial können verschiedene Arten von Pulver verwendet werden, insbesondere Metallpulver, Kunststoffpulver, Keramikpulver, Sand, gefüllte oder gemischte Pulver.

## Patentansprüche

1. Pulveraustragseinheit (30; 40; 50) zum Aus- und/oder Nachrüsten einer Vorrichtung (1) zum generativen Herstellen eines dreidimensionalen Objekts (2) durch selektives schichtweises Verfestigen von pulverförmigem Aufbaumaterial (15), wobei die Vorrichtung einen über ein Baufeld (8) bewegbaren Beschichter (16) zum Aufbringen einer Schicht des Aufbaumaterials auf das Baufeld und eine Verfestigungsvorrichtung (20) zum selektiven Verfestigen der aufgebrachten Schicht an Stellen, die einem Querschnitt des herzustellenden Objekts entsprechen, enthält und dazu ausgebildet und/oder gesteuert ist, die Schritte des Aufbringens und des selektiven Verfestigens zu wiederholen, bis das Objekt fertiggestellt ist,
wobei die Pulveraustragseinheit enthält:
einen Pulverbehälter (36; 42; 52) zur Aufnahme von pulverförmigem Aufbaumaterial und
einen Einfüllschacht (35; 41; 51) zum Einfüllen von pulverförmigem Aufbaumaterial in den Pulverbehälter,
wobei die Pulveraustragseinheit dazu eingerichtet ist, das pulverförmige Aufbaumaterial in dem Pulverbehälter und in dem Einfüllschacht unabhängig voneinander zu fluidisieren.

2. Pulveraustragseinheit (30; 40; 50) gemäß Anspruch 1, die weiter eine Dosiereinrichtung (39; 48; 55) enthält, die dazu eingerichtet ist, das in dem Pulverbehälter enthaltene pulverförmige Aufbaumaterial (15b) kontinuierlich oder portionsweise an eine Beschichtungseinheit des Beschichters (16) der Vorrichtung (1) abzugeben.

3. Pulveraustragseinheit (30; 40; 50) gemäß Anspruch 1 oder 2, bei der
der Pulverbehälter (36; 42; 52) und/oder der Einfüllschacht (35; 41; 51) einen Boden (33; 44, 45, 46; 53) mit einer porösen Platte und/oder Lochplatte enthält, durch die Gas unabhängig voneinander in den Pulverbehälter und/oder in den Einfüllschacht geleitet werden kann,
wobei der Boden vorzugsweise ein Heizelement enthält zum Beheizen der porösen Platte und/oder der Lochplatte und/oder des Gases.

4. Pulveraustragseinheit (30) gemäß einem der Ansprüche 1 bis 3, bei der der Pulverbehälter (36) und der Einfüllschacht (35) Teilkammern eines Behälters sind, die durch eine Trennwand (34) abschnittsweise voneinander getrennt sind.

5. Pulveraustragseinheit gemäß einem der Ansprüche 1 bis 4, bei der der Pulverbehälter (42; 52) und der Einfüllschacht (41; 51) als zwei separate Einheiten gebildet sind, die miteinander verbunden sind.

6. Pulveraustragseinheit (30; 40; 50) gemäß einem der Ansprüche 1 bis 5, bei der eine Verbindungsstelle (37; 43) zwischen dem Einfüllschacht (35; 41; 51) und dem Pulverbehälter (36; 42; 52) in der unteren Hälfte der Pulveraustragseinheit, vorzugsweise am Boden (33; 44, 45, 46; 53) der Pulveraustragseinheit angeordnet ist.

7. Pulveraustragseinheit (30; 40; 50) gemäß einem der Ansprüche 1 bis 6, bei der der Pulverbehälter (36; 42; 52) an seiner Oberseite (38; 47; 54) eine Strahlungsheizung enthält zum Vorwärmen des in ihm aufgenommenen pulverförmigen Aufbaumaterials (15b) .

8. Beschichter (16) zum Aus- und/oder Nachrüsten einer Vorrichtung (1) zum generativen Herstellen eines dreidimensionalen Objekts (2) durch selektives schichtweises Verfestigen von pulverförmigem Aufbaumaterial (15), wobei die Vorrichtung daran angepasst ist, den Beschichter so aufzunehmen, dass er über ein Baufeld (8) bewegbar ist zum Aufbringen einer Schicht des Aufbaumaterials auf das Baufeld, eine Verfestigungsvorrichtung (20) zum selektiven Verfestigen der aufgebrachten Schicht an Stellen, die einem Querschnitt des herzustellenden Objekts entsprechen, enthält und dazu ausgebildet und/oder gesteuert ist, die Schritte des Aufbringens und des selektiven Verfestigens zu wiederholen, bis das Objekt fertiggestellt ist,
wobei der Beschichter eine Pulveraustragseinheit (30; 40; 50) gemäß einem der Ansprüche 1 bis 7 enthält.

9. Beschichter (16) gemäß Anspruch 8, der
weiter eine Beschichtungseinheit enthält, die zum Aufnehmen des von der Pulveraustragseinheit (30; 40; 50) abgegebenen Aufbaumaterials (15) und zum Aufbringen des Aufbaumaterials auf das Baufeld geeignet ist,
wobei die Beschichtungseinheit vorzugsweise mit der Pulveraustragseinheit gemeinsam bewegbar realisiert ist.

10. Vorrichtung (1) zum generativen Herstellen eines dreidimensionalen Objekts (2) durch selektives schichtweises Verfestigen von Aufbaumaterial (15), umfassend:
einen über ein Baufeld (8) bewegbaren Beschichter (16) zum Aufbringen einer Schicht des Aufbaumaterials auf das Baufeld und
eine Verfestigungsvorrichtung (20) zum selektiven Verfestigen der aufgebrachten Schicht an Stellen, die einem Querschnitt des herzustellenden Objekts entsprechen,
wobei die Vorrichtung ausgebildet und/oder gesteuert ist:
die Schritte des Aufbringens und des selektiven Verfestigens zu wiederholen, bis das Objekt fertiggestellt ist, und
die Vorrichtung weiter eine Pulveraustragseinheit (30; 40; 50) gemäß einem der Ansprüche 1 bis 7 enthält und/oder der Beschichter als Beschichter gemäß einem der Ansprüche 8 bis 9 gebildet ist.

11. Vorrichtung gemäß Anspruch 10, in der die Pulveraustragseinheit (30; 40; 50) mit einer Beschichtungseinheit des Beschichters gemeinsam bewegbar angebracht ist.

12. Verfahren zum generativen Herstellen eines dreidimensionalen Objekts (2) durch schichtweises Aufbringen und selektives Verfestigen eines pulverförmigen Aufbaumaterials (15) mit den Schritten:
Aufbringen einer Schicht des pulverförmigen Aufbaumaterials auf ein Baufeld (8) mittels eines über das Baufeld fahrenden Beschichters (16),
selektives Verfestigen der aufgebrachten Pulverschicht an Stellen, die einem Querschnitt des herzustellenden Objekts entsprechen, und
Wiederholen der Schritte des Aufbringens und des selektiven Verfestigens, bis das Objekt fertiggestellt ist,
wobei der Schritt des Aufbringens mit Hilfe einer Pulveraustragseinheit (30; 40; 50) durchgeführt wird, die einen Pulverbehälter (36; 42; 52) zur Aufnahme von pulverförmigem Aufbaumaterial und einen Einfüllschacht (35; 41; 51) zum Einfüllen von pulverförmigem Aufbaumaterial in den Pulverbehälter enthält,
wobei die Pulveraustragseinheit über den Einfüllschacht pulverförmiges Aufbaumaterial aufnimmt und
das in ihr enthaltene pulverförmige Aufbaumaterial für den Pulverbehälter und den Einfüllschacht unabhängig voneinander fluidisiert.

13. Verfahren gemäß Anspruch 12, bei dem
die Pulveraustragseinheit (30; 40; 50) das in dem Pulverbehälter (36; 42; 52) enthaltene pulverförmige Aufbaumaterial kontinuierlich oder portionsweise an eine Beschichtungseinrichtung des Beschichters (16) abgibt und/oder
die Pulveraustragseinheit gemeinsam mit einer Beschichtungseinrichtung des Beschichters über das Baufeld verfahren wird.

14. Verfahren gemäß Anspruch 12 oder 13, bei dem
während des Aufnehmens des pulverförmigen Aufbaumaterials (15a) über den Einfüllschacht (35; 41; 51) das pulverförmige Aufbaumaterial (15b) in dem Pulverbehälter der Pulveraustragseinheit (30; 40; 50) und in dem Einfüllschacht (35; 41; 51) der Pulveraustragseinheit fluidisiert wird und
während des Verfahrens der Pulveraustragseinheit über das Baufeld (8) das pulverförmige Aufbaumaterial in dem Einfüllschacht der Pulveraustragseinheit nicht fluidisiert wird, aber in dem Pulverbehälter der Pulveraustragseinheit fluidisiert wird.

15. Verfahren gemäß einem der Ansprüche 12 bis 14, bei dem
Gas durch eine in dem Boden (33; 44, 45, 46; 53) der Pulveraustragseinheit (30; 40; 50) enthaltene poröse Platte und/oder Lochplatte unabhängig voneinander in den Pulverbehälter (36; 42; 52) und/oder in den Einfüllschacht (35; 41; 51) geleitet wird,
wobei vorzugsweise die poröse Platte und/oder die Lochplatte und/oder das Gas beheizt wird.

## Claims

1. A powder discharge unit (30; 40; 50) for equipping and/or upgrading a device (1) for generatively manufacturing a three-dimensional object (2) by a selective layer-by-layer solidification of building material in powder form (15), wherein the device comprises a recoater (16) movable across a build area (8) for applying a layer of the building material to the build area and a solidification device (20) for selectively solidifying the applied layer at points corresponding to a cross-section of the object to be manufactured and is configured and/or controlled to repeat the steps of applying and selectively solidifying until the object is completed,
wherein the powder discharge unit comprises:
a powder container (36; 42; 52) for receiving building material in powder form and
a filling chamber (35; 41; 51) for filling in building material in powder form into the powder container,
wherein the powder discharge unit is configured to fluidize the building material in powder form in the powder container and in the filling chamber independently of one another.

2. The powder discharge unit (30; 40; 50) according to claim 1, further comprising a dosing device (39; 48; 55) con-figured to dispense the building material in powder form (15b) contained in the powder container to a recoating unit of the recoater (16) of the device (1) continuously or in portions.

3. The powder discharge unit (30; 40; 50) according to claim 1 or 2, wherein
the powder container (36; 42; 52) and/or the filling chamber (35; 41; 51) comprises a bottom (33; 44, 45, 46; 53) having a porous plate and/or perforated plate through which gas can be guided into the powder container and/or into the filling chamber independently of one another,
wherein the bottom preferably comprises a heating element for heating the porous plate and/or the perforated plate and/or the gas.

4. The powder discharge unit (30) according to one of claims 1 to 3, wherein the powder container (36) and the filling chamber (35) are partial chambers of a container separated from each other in sections by a separating wall (34).

5. The powder discharge unit according to one of claims 1 to 4, wherein the powder container (42; 52) and the filling chamber (41; 51) are formed as two separate units being interconnected.

6. The powder discharge unit (30; 40; 50) according to one of claims 1 to 5, wherein a connecting point (37; 43) between the filling chamber (35; 41; 51) and the powder container (36; 42; 52) is arranged in the lower half of the powder dis-charge unit, preferably at the bottom (33; 44, 45, 46; 53) of the powder discharge unit.

7. The powder discharge unit (30; 40; 50) according to one of claims 1 to 6, wherein the powder container (36; 42; 52) comprises at its upper side (38; 47; 54) a radiation heater for preheating the building material in powder form (15b) received therein.

8. A recoater (16) for equipping and/or upgrading a device (1) for generatively manufacturing a three-dimensional object (2) by a selective layer-by-layer solidification of building material in powder form (15), wherein the device is adapted to receive the recoater such that it is movable across a build area (8) for applying a layer of the building material to the build area, comprises a solidification device (20) for selectively solidifying the applied layer at points corresponding to a cross-section of the object to be manufactured and is configured and/or controlled to repeat the steps of applying and selectively solidifying until the object is completed,
wherein the recoater comprises a powder discharge unit (30; 40; 50) according to one of claims 1 to 7.

9. The recoater (16) according to claim 8,
further comprising a recoating unit suitable for receiving the building material (15) dispensed by the powder dis-charge unit (30; 40; 50) and for applying the building material to the build area,
wherein the recoating unit is preferably realized as being movable together with the powder discharge unit.

10. A device (1) for generatively manufacturing a three-dimensional object (2) by a selective layer-by-layer solidification of building material (15), comprising:
a recoater (16) movable across a build area (8) for applying a layer of the building material to the build area and
a solidification device (20) for selectively solidifying the applied layer at points corresponding to a cross-section of the object to be manufactured,
wherein the device is configured and/or controlled:
to repeat the steps of applying and selectively solidifying until the object is completed, and
the device further comprises a powder discharge unit (30; 40; 50) according to one of claims 1 to 7 and/or the re-coater is formed as a recoater according to one of claims 8 to 9.

11. The device according to claim 10, wherein the powder discharge unit (30; 40; 50) is mounted as being movable together with a recoating unit of the recoater.

12. A method of generatively manufacturing a three-dimensional object (2) by a layer-by-layer application and selective solidification of a building material in powder form (15), comprising the steps of:
applying a layer of the building material in powder form to a build area (8) by means of a recoater (16) moving across the build area,
selectively solidifying the applied powder layer at points corresponding to a cross-section of the object to be manufactured, and
repeating the steps of applying and selectively solidifying until the object is completed,
wherein the step of applying is performed with the aid of a powder discharge unit (30; 40; 50) comprising a powder container (36; 42; 52) for receiving building material in powder form and a filling chamber (35; 41; 51) for filling in building material in powder form into the powder container,
wherein the powder discharge unit receives building material in powder form via the filling chamber and
fluidizes the building material in powder form contained in the powder discharge unit independently of one another for the powder container and for the filling chamber.

13. The method according to claim 12, wherein
the powder discharge unit (30; 40; 50) dispenses the building material in powder form contained in the powder container (36; 42; 52) to a recoating device of the recoater (16) continuously or in portions and/or
the powder discharge unit is moved together with a re-coating device of the recoater across the build area.

14. The method according to claim 12 or 13, wherein
during the process of receiving the building material in powder form (15a) via the filling chamber (35; 41; 51), the building material in powder form (15b) is being fluidized in the powder container of the powder discharge unit (30; 40; 50) and in the filling chamber (35; 41; 51) of the powder discharge unit, and
while moving the powder discharge unit across the build area (8), the building material in powder form is not being fluidized in the filling chamber of the powder discharge unit, but is being fluidized in the powder container of the powder discharge unit.

15. The method according to one of claims 12 to 14, wherein
gas is guided into the powder container (36; 42; 52) and/or into the filling chamber (35; 41; 51) independently of one another through a porous plate and/or perforated plate comprised in the bottom (33; 44, 45, 46; 53) of the powder discharge unit (30; 40; 50),
wherein preferably the porous plate and/or the perforated plate and/or the gas is being heated.

## Revendications

1. Unité de distribution de poudre (30 ; 40 ; 50) pour l'équipement et/ou le rééquipement d'un appareil (1) pour la fabrication générative d'un objet tridimensionnel (2) par solidification sélective couche par couche d'un matériau de construction pulvérulent (15), l'appareil comprenant un dispositif d'application (16) déplaçable au travers d'une zone de construction (8) pour l'application d'une couche du matériau de construction sur la zone de construction et un dispositif de solidification (20) pour la solidification sélective de la couche appliquée en des endroits correspondants à une coupe transversale de l'objet à produire, et étant adapté et/ou contrôlé pour répéter les étapes d'application et de solidification sélective jusqu'à ce que l'objet soit terminé,
dans lequel l'unité de distribution de poudre contient :
un réservoir de poudre (36 ; 42 ; 52) pour recevoir un matériau de construction pulvérulent, et
un puits de remplissage (35 ; 41 ; 51) pour le remplissage du réservoir de poudre avec le matériau de construction pulvérulent,
dans lequel l'unité de distribution de poudre est adaptée pour fluidifier le matériau de construction pulvérulent dans le réservoir de poudre et dans le puits d'alimentation indépendamment l'un de l'autre.

2. Unité de distribution de poudre (30 ; 40 ; 50) selon la revendication 1, qui comprend en outre un dispositif de dosage (39 ; 48 ; 55) qui est agencé pour distribuer le matériau de construction pulvérulent (15b) contenu dans le réservoir de poudre en continu ou par portions à une unité d'application du dispositif d'application (16) de l'appareil (1).

3. Unité de distribution de poudre (30 ; 40 ; 50) selon la revendication 1 ou 2, dans lequel
le réservoir de poudre (36 ; 42 ; 52) et/ou le puits de remplissage (35 ; 41 ; 51) comporte un fond (33 ; 44, 45, 46 ; 53) avec une plaque poreuse et/ou une plaque perforée à travers laquelle du gaz peut être introduit dans le réservoir de poudre et/ou dans le puits de remplissage indépendamment l'un de l'autre,
dans lequel le fond contient de préférence un élément chauffant pour le chauffage de la plaque poreuse et/ou de la plaque perforée et/ou du gaz.

4. Unité de distribution de poudre (30) selon l'une quelconque des revendications 1 à 3, dans lequel le réservoir de poudre (36) et le puits de remplissage (35) sont des chambres partielles d'un réservoir qui sont séparées les unes des autres en sections par une paroi de séparation (34).

5. Unité de distribution de poudre selon l'une quelconque des revendications 1 à 4, dans lequel le réservoir de poudre (42 ; 52) et le puits de remplissage (41 ; 51) sont formés comme deux unités séparées reliées l'une à l'autre.

6. Unité de distribution de poudre (30 ; 40 ; 50) selon l'une quelconque des revendications 1 à 5, dans lequel un point de liaison (37 ; 43) entre le puits de remplissage (35 ; 41 ; 51) et le réservoir de poudre (36 ; 42 ; 52) est disposé dans la moitié inférieure de l'unité de distribution de poudre, de préférence au fond (33 ; 44, 45, 46 ; 53) de l'unité de distribution de poudre.

7. Unité de distribution de poudre (30 ; 40 ; 50) selon l'une quelconque des revendications 1 à 6, dans lequel le réservoir de poudre (36 ; 42 ; 52) comprend un dispositif de chauffage par rayonnement sur son côté supérieur (38 ; 47 ; 54) pour préchauffer le matériau de construction pulvérulent (15b) reçu dans celui-ci.

8. Dispositif d'application (16) pour équiper et/ou rééquiper un appareil (1) pour la fabrication générative d'un objet tridimensionnel (2) par solidification sélective d'un matériau de construction pulvérulent (15) couche par couche, dans lequel l'appareil est adapté pour recevoir le dispositif d'application de manière à ce qu'il soit déplaçable au travers d'une zone de construction (8) pour appliquer une couche du matériau de construction sur la zone de construction, comprends un dispositif de solidification (20) pour solidifier sélectivement la couche appliquée en des endroits correspondants à une coupe transversale de l'objet à produire et est adapté et/ou contrôlé pour répéter les étapes d'application et de solidification sélective jusqu'à ce que l'objet soit terminé,
dans lequel le dispositif d'application comprend une unité de distribution de poudre (30 ; 40 ; 50) selon l'une quelconque des revendications 1 à 7.

9. Dispositif d'application (16) selon la revendication 8, qui
comprend en outre une unité d'application adaptée pour recevoir le matériau de construction (15) déchargé de l'unité de distribution de poudre (30 ; 40 ; 50) et pour appliquer le matériau de construction sur la zone de construction,
dans lequel l'unité de revêtement est de préférence réalisée de manière mobile conjointement avec l'unité de décharge de poudre.

10. Appareil (1) pour la fabrication générative d'un objet tridimensionnel (2) par solidification sélective, couche par couche, d'un matériau de construction (15), comprenant :
un dispositif d'application (16) déplaçable au travers d'une zone de construction (8) pour appliquer une couche du matériau de construction sur la zone de construction et
un dispositif de solidification (20) pour solidifier sélectivement la couche appliquée en des endroits correspondants à une coupe transversale de l'objet à produire,
dans lequel l'appareil est conçu et/ou contrôlé pour répéter les étapes d'application et de solidification sélective jusqu'à ce que l'objet soit terminé, et
l'appareil comprend en outre une unité de distribution de poudre (30 ; 40 ; 50) selon l'une quelconque des revendications 1 à 7 et/ou le dispositif d'application est formé comme un dispositif d'application selon l'une quelconque des revendications 8 à 9.

11. Appareil selon la revendication 10, dans lequel l'unité de distribution de poudre (30 ; 40 ; 50) est montée de manière à être mobile conjointement avec une unité d'application du dispositif d'application.

12. Procédé pour la fabrication générative d'un objet tridimensionnel (2) par application et solidification sélective, couche par couche, d'un matériau de construction pulvérulent (15), comprenant les étapes
application d'une couche du matériau de construction pulvérulent sur une zone de construction (8) au moyen d'un dispositif d'application (16) se déplaçant au travers de la zone de construction,
solidification sélective de la couche de poudre appliquée en des endroits correspondants à une coupe transversale de l'objet à produire, et
répétition des étapes d'application et de solidification sélective jusqu'à ce que l'objet soit terminé,
dans lequel ladite étape d'application est effectuée au moyen d'une unité de distribution de poudre (30 ; 40 ; 50) comprenant un réservoir de poudre (36 ; 42 ; 52) pour contenir un matériau de construction pulvérulent et un puits de remplissage (35 ; 41 ; 51) pour remplir le matériau de construction pulvérulent dans ledit réservoir de poudre,
l'unité de distribution de poudre reçoit le matériau de construction pulvérulent par l'intermédiaire du puits de remplissage et
fluidifie le matériau de construction pulvérulent qu'il contient pour le réservoir de poudre et le puits de remplissage indépendamment l'un de l'autre.

13. Procédé selon la revendication 12, dans lequel
l'unité de distribution de poudre (30 ; 40 ; 50) délivre le matériau de construction pulvérulent contenu dans le réservoir de poudre (36 ; 42 ; 52) en continu ou par portions à une unité d'application du dispositif d'application (16) et/ou
l'unité de décharge de poudre est déplacée au travers de la zone de construction conjointement avec une unité d'application du dispositif d'application.

14. Procédé selon la revendication 12 ou 13, dans lequel
pendant la réception du matériau de construction pulvérulent (15a) par l'intermédiaire du puits de remplissage (35 ; 41 ; 51), le matériau de construction pulvérulent (15b) est fluidisé dans le réservoir de poudre de l'unité de distribution de poudre (30 ; 40 ; 50) et dans le puits de remplissage (35 ; 41 ; 51) de l'unité de distribution de poudre, et
pendant le mouvement de l'unité de distribution de poudre au travers de la zone de construction (8), le matériau de construction pulvérulent n'est pas fluidifié dans le puits de remplissage de l'unité de distribution de poudre, mais il est fluidifié dans le réservoir de poudre de l'unité de distribution de poudre.

15. Procédé selon l'une quelconque des revendications 12 à 14, dans lequel
du gaz est introduit dans le réservoir de poudre (36 ; 42 ; 52) et/ou dans le puits de remplissage (35 ; 41 ; 51), indépendamment l'un de l'autre, à travers une plaque poreuse et/ou une plaque perforée contenue dans le fond (33 ; 44, 45, 46 ; 53) de l'unité de distribution de poudre (30 ; 40 ; 50),
dans lequel de préférence la plaque poreuse et/ou la plaque perforée et/ou le gaz est chauffé.
